# EUROPÄISCHE PATENTSCHRIFT

(11) **EP 2 835 767 B1**
(45) Veröffentlichungstag und Bekanntmachung des Hinweises auf die Patenterteilung: **06.01.2016**
(21) Anmeldenummer: 13179397.8
(22) Anmeldetag: 06.08.2013
(51) Int. Cl.: G06K 19/07, G06K 19/077, G06K 7/10

(54) **Kundenmedium zur Erfassung der Beanspruchung von Dienstleistungen**
Customer medium for detecting the use of services
Support client pour détecter la sollicitation de services

(43) Veröffentlichungstag der Anmeldung: 11.02.2015
(73) Patentinhaber: SKIDATA AG, 5083 Grödig/Salzburg (AT)
(72) Erfinder: Egli, Charles, 1033 Cheseaux (CH); Maupas, Fabien, 25300 Pontarlier (FR); Geijo Lima, José Luis, 2074 Marin (CH); Riedel, Jürgen, 2520 La Neuveville (CH); Schwander, Martin, 3238 Gals (CH)
(74) Vertreter: Karakatsanis, Georgios

(56) Entgegenhaltungen:
- EP-A1- 2 221 984
- US-A1- 2013 072 255

## Beschreibung

Die vorliegende Erfindung bezieht sich auf ein Kundenmedium zur Erfassung der Beanspruchung von Dienstleistungen gemäß dem Oberbegriff des Patentanspruchs 1. Insbesondere bezieht sich die Erfindung auf ein Kundenmedium zur Verwendung bei einem "be-in-be-out"-Ticket-Erfassungssystem.

"Be-in-be-out"-Ticket-Erfassungssysteme erfreuen sich steigender Beliebtheit, da sie den Passagieren von öffentlichen Verkehrsmitteln den größtmöglichen Komfort bieten. Im Rahmen derartiger Systeme soll die Aufenthaltsdauer eines Passagiers in einem öffentlichen Verkehrsmittel fortlaufend ermittelt werden und mit der innerhalb dieser Zeit zurückgelegten Strecke in Verbindung gebracht werden.

Dokument EP 2 221 984 A1 offenbart ein Kundenmedium für die Bereitstellung von NFC-Diensten , mit NFC-Aktivierung im Bereich von NFC-Endgeräte.

Der vorliegenden Erfindung liegt die Aufgabe zugrunde, ein Kundenmedium zur Erfassung der Beanspruchung_von Dienstleistungen, insbesondere ein Kundenmedium zur Verwendung bei einem "be-in-be-out"-Ticket-Erfassungssystem anzugeben, welches einen sehr geringen Energieverbrauch aufweist und in einer robusten Datenerfassung resultiert.

Des Weiteren soll sowohl eine kurz- als auch eine langreichweitige Datenerfassung ermöglicht werden, wobei eine verschlüsselte Datenübertragung zur Verfügung gestellt werden soll.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Kundenmedium zur Erfassung der Beanspruchung_von Dienstleistungen, insbesondere zur Verwendung bei einem "be-in-be-out"-Ticket-Erfassungssystem vorgeschlagen, welches eine erste, eine zweite und eine dritte Antenne umfasst, die auf einem PCB-Substrat ausgeführt sind. Das Kundenmedium wird vorzugsweise einer Person zugeordnet. Die Antennen des Kundenmediums können als Dipole, gefaltete Dipole, "inverted F"-Antennen, Quadrupol-Antennen, ähnlich Patch-Antennen oder Antennenschleifen und -spulen ausgeführt sein.

Hierbei ist die erste Antenne vorzugsweise für den Bereich 13 MHz - 8 GHz ausgelegt und dient als Wake-up-Antenne zum Empfangen eines Wake-up-Signals, wenn sich das Kundenmedium in einem "Sleep"-Modus befindet. Das Wake-up-Signal wird vorzugsweise amplitudenmoduliert gesendet und enthält eine vorgegebene Signalfolge, wobei das von der Wake-up-Antenne empfangene Signal von einem als Wake-up-Erfassungsmodul dienenden Operationsverstärker verstärkt und demoduliert und von einem im "Sleep-Modus" teilweise aktivierten Mikroprozessor ausgewertet wird, wobei für den Fall eines als gültig erkannten Wake-up-Signals, d.h. eines Signals mit der richtigen Sequenz, der Mikroprozessor vollständig aktiviert wird und der Tranceiver des Kundenmediums eingeschaltet wird, wodurch das Kundenmedium in einen Aktiv-Modus übergeht. Der Operationsverstärker ist die einzige Komponente des Kundenmediums, die im "Sleep"- Modus vollständig aktiv ist und ist derart ausgeführt, dass er einen minimalen Stromverbrauch aufweist. Im "Sleep-Modus" ist zudem lediglich ein Teil des Mikroprozessors aktiviert. Das Kundenmedium weist zudem einen Ruhe-Modus auf, bei dem nur der Mikroprozessor aktiv ist, um den Übergang in den "Sleep"-Modus oder in den Aktiv-Modus gemäß vorgegebener Routinen zu steuern. Der Mikroprozessor des Kundenmediums weist demnach unterschiedliche Aktivitätsmodi auf.

Die zweite Antenne empfängt und sendet vorzugsweise im Bereich 2,4 GHz - 8 GHz GHz und ist mit einem RF-Tranceiver verbunden, wobei der Tranceiver nur dann aktiviert wird, wenn sich das Kundenmedium im Aktiv-Modus befindet. Die Bitrate des Tranceivers beträgt vorzugsweise 1 oder 2 Mbit/s. Über den Tranceiver kann die Daten-Kommunikation mit entsprechenden Leseeinrichtungen über mehrere Kanäle mit leicht unterschiedlichen Frequenzen oder mit Breitband-Signalen durchgeführt werden, um auf diese Weise Kollisionen mit fremden Diensten zu vermeiden und eine schnelle Kontaktaufnahme zu ermöglichen.

Um ein Risiko der Störung während der Datenübertragung zu reduzieren, wird durch den Tranceiver ein laufendes Wechseln der Datenkanäle ermöglicht (frequency hopping). Beispielsweise können zur Datenübertragung über die zweite Antenne im 2,4 GHz-Band drei "advertising channels" zur Kontaktaufnahme mit einer Leseeinrichtung und fünf "communication channels" zur Datenkommunikation mit der Leseeinrichtung verwendet werden.

Die erste und die zweite Antenne dienen der langreichweitigen Daten-Kommunikation mit zumindest einer Leseeinrichtung eines Systems zur Erfassung einer auf dem Kundenmedium abgelegten Zugangsberechtigung bzw. zur Erfassung der Medieninformation des Kundenmediums, zum Auslesen von im Kundenmedium gespeicherten Daten und/oder zum Beschreiben des Kundenmediums. Langreichweitige Daten-Kommunikation im Sinne der Erfindung ist eine Daten-Kommunikation mit einer Reichweite mehr als einem Meter. Durch die Medieninformation kann das Kundenmedium eineindeutig identifiziert werden, wobei anhand der Medieninformation festgestellt werden kann, ob beispielsweise eine Berechtigung für die Beanspruchung einer Dienstleistung vorliegt. Beispielsweise kann die Medieninformation eine eineindeutige Nummer sein.

Die dritte Antenne ist eine Antenne vorzugsweise für den Bereich um 13,56 MHz, welche mit einem NFC-Modul im integrierten Schaltkreis des Kundenmediums verbunden ist. Das NFC-Modul ist vorzugsweise gemäß dem ISO 18092 Standard und dabei verwendeten Sicherheitsmechanismen ausgeführt und dient im Aktiv-Modus des Kundenmediums der kurzreichweitigen Daten-Kommunikation im Bereich von einigen Zentimetern, beispielsweise mit einem mobilen Kontrollgerät zur Überprüfung der Gültigkeit einer auf dem Kundenmedium abgelegten Zugangsberechtigung oder der Überprüfung von personenbezogenen Daten.

Das Kundenmedium weist demnach einen "Sleep"-Modus, einen Ruhe-Modus und einen Aktiv-Modus auf, wobei im "Sleep"-Modus nur der Operationsverstärker und ein Teil des Mikroprozessorsaktiviert sind. Der Mikroprozessor des Kundenmediums ist im "Sleep"-Modus weitestgehend ausgeschaltet und im Ruhe- und Aktiv-Modus vollständig eingeschaltet, wobei der Transceiver im "Sleep"- und im Ruhe-Modus ausgeschaltet ist und lediglich im Aktiv- Modus eingeschaltet ist. Auf diese Weise wird der Energieverbrauch des Kundenmediums so gering wie möglich gehalten.

Das Kundenmedium weist einen mit dem Mikroprozessor verbundenen integrierten Schaltkreis auf, der zumindest eine crypto-engine umfasst, wobei vorzugsweise drei cryptoengines enthalten sind, beispielsweise für GRAIN 128, GRAIN 128A, 3-DES oder AES-128. Der Mikroprozessor oder das NFC-Modul kann auch in den integrierten Schaltkreis integriert sein.

Das Kundenmedium kann als aktives Kundenmedium ausgeführt sein, wobei in diesem Fall eine Batterie, vorzugsweise ein 3-Volt-Batterie zur Stromversorgung der Komponenten vorgesehen ist. Optional kann das Kundenmedium ein LCD-Display und einen entsprechenden Treiber und/oder eine Einrichtung zur optischen und/oder akustischen Anzeige z.B. eines niedrigen Batteriestatus oder weiterer Daten oder Zustände des Kundenmediums aufweisen.

Im Rahmen weiterer Ausführungsformen ist das Kundenmedium derart ausgeführt, dass es über einen HF-Puls, der von zumindest einer Leseeinrichtung ausgestrahlt wird, mit Energie geladen wird, somit die benötigte Energie aus dem Feld der Leseeinrichtung bezieht und anschließend für eine vorgegebene Zeit autark arbeiten kann. Zu diesem Zweck weist das Kundenmedium einen Kondensator zum Speichern der Energie und einen entsprechenden Schaltkreis auf. Der Puls ist vorzugsweise ein Puls im UHF-Bereich.

Für den Fall, dass das Kundenmedium keine eigene Energieversorgung aufweist, kann zudem das "Wake-Up" Signal" im HF-Puls enthalten sein. Ferner kann für den Fall, dass das Kundenmedium keine eigene Energieversorgung aufweist vorgesehen sein, dass in regelmäßigen, vorgegebenen Zeitintervallen von zumindest einer Leseeinrichtung ein HF-Signal ausgestrahlt wird, um die sich in Reichweite befindlichen Kundenmedien mit Energie zu versorgen.

Ferner kann das Kundenmedium ein entsprechend dimensioniertes Solarmodul aufweisen, um auf diese Weise die Batterie aufzuladen. Im Rahmen einer Weiterbildung der Erfindung verfügt das Kundenmedium über Mittel zur Eingabe einer PIN, die als numerische Tastatur ausgeführt sein können und/oder über zumindest einen Biometriesensor, beispielsweise einen Fingerabdrucksensor, um die Berechtigung der Benutzung seitens einer Person zu überprüfen.

Vorzugsweise weist das Kundenmedium ein ISO-Kartenformat auf.

Das erfindungsgemäße Kundenmedium ermöglicht bei minimalem Stromverbrauch eine sichere und verschlüsselte Kommunikation mit entsprechenden Leseeinrichtungen, da eine Authentifizierung und eine verschlüsselte Datenübertragung zur Verfügung gestellt werden.

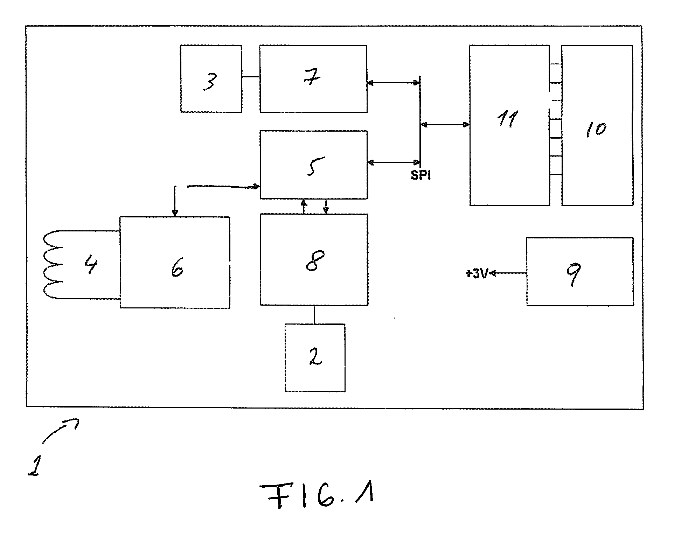

Die Erfindung wird im Folgenden anhand der beigefügten Figur, welche eine schematische Ansicht des Aufbaus eines Kundenmediums im ISO-Kartenformat darstellt, beispielhaft näher erläutert.

In der beigefügen Figur ist ein Kundenmedium 1 im ISO-Kartenformat dargestellt, welches eine erste Antenne 2, eine zweite Antenne 3, welche als Dipol, Quadrupol, gefaltete Dipol, ähnlich Patch-Antennen oder inverted F-Antenne ausgeführt sind und eine dritte Antenne 4 aufweist, welche vorzugsweise als Spule auf einem PCB-Substrat ausgeführt ist. Ferner weist das Kundenmedium einen Mikroprozessor 5 und einen mit dem Mikroprozessor 5 verbundenen integrierten Schaltkreis 6 auf, wobei der integrierte Schaltkreis 6 oder der Mikroprozessor 5 zumindest eine crypto-engine umfasst.

Bezugnehmend auf die beigefügte Figur weist das Kundenmedium 1 einen RF Transceiver 7 auf, welcher über die zweite Antenne 3 vorzugsweise im Bereich 2,4 GHz senden und empfangen kann, wobei der Transceiver 7 nur dann aktiviert wird, wenn sich das Kundenmedium 1 in einem Aktiv-Modus befindet.

Die erste Antenne 2 ist vorzugsweise für den Bereich 2,4 GHz ausgelegt und dient als Wake-up-Antenne zum Empfangen eines amplitudenmodulierten Wake-up-Signals, wenn sich das Kundenmedium in einem "Sleep"-Modus befindet. Das von der Wake-up-Antenne 2 empfangene Signal wird von einem als Wake-up-Erfassungsmodul dienenden Operationsverstärker 8 verstärkt und demoduliert und von dem im "Sleep"-Modus aktiven Teil des Mikroprozessors 5 ausgewertet, wobei für den Fall eines als gültig erkannten Wake-up-Signals, d.h. eines Signals mit der richtigen Sequenz, der Mikroprozessor 5 vollständig eingeschaltet wird, wodurch das Kundenmedium 1 in einen Aktiv-Modus übergeht. Der Operationsverstärker 8 ist die einzige Komponente des Kundenmediums 1, die im "Sleep"-Modus vollständig aktiv ist, wodurch der Energieverbrauch des Kundenmediums minimiert wird.

Die erste und zweite Antenne 2, 3 dienen der langreichweitigen Daten-Kommunikation mit zumindest einer Leseeinrichtung zur Erfassung der Beanspruchung von Dienstleistungen, beispielsweise zur Erfassung einer auf dem Kundenmedium 1 abgelegten Zugangsberechtigung oder zur verschlüsselten Übertragung der Identität und/oder weiterer Daten des Benutzers des Kundenmediums.

Die dritte Antenne 4 ist eine Antenne vorzugsweise im Bereich 13,56 MHz, welche mit einem NFC-Modul im integrierten Schaltkreis 6 des Kundenmediums 1 verbunden ist. Das NFC-Modul ist vorzugsweise gemäß dem ISO 1802 Standard ausgeführt und verwendet integrierte Sicherheitsmechanismen . Es dient im Aktiv-Modus des Kundenmediums 1 der kurzreichweitigen Daten-Kommunikation, beispielsweise mit einem mobilen Kontrollgerät zur Überprüfung der Gültigkeit einer auf dem Kundenmedium 1 abgelegten Zugangsberechtigung. Mittels des NFC-Moduls kann das Kundenmedium beispielsweise mit mobilen Geräten, beispielsweise mit einem Mobiltelefon verbunden werden, welches als Ein- und Ausgabegerät für das Kundenmedium dienen kann. Z.B. können auf diese Weise Daten, die im Kundenmedium gespeichert sind gelesen werden.

Das Kundenmedium kann zur Speicherung von Daten über einen oder mehrere nicht flüchtige Speicher verfügen.

Im Rahmen weiterer Ausgestaltungen, bei denen keine kurzreichweitige Kommunikation, z.B. über NFC benötigt wird, kann die dritte Antenne 4 entfallen, wobei in diesem Fall nur eine langreichweitige Kommunikation über die erste und zweite Antenne 2, 3 möglich ist.

Bei dem im Rahmen der Figur gezeigten Beispiel ist das Kundenmedium 1 als aktives Kundenmedium ausgeführt und umfasst eine 3-Volt Batterie 9 zur Stromversorgung der Komponenten. Optional kann das Kundenmedium ein LCD-Display 10 und einen entsprechenden Treiber 11 mit minimalem Stromverbrauch und/oder eine Einrichtung zur optischen und/oder akustischen Anzeige z.B. eines niedrigen Batteriestatus aufweisen. Hierbei können Informationen über den Batteriestatus auch über die zweite oder dritte Antenne 3, 4 an externe Leseeinrichtungen oder an ein mobiles Kontrollgerät übertragen werden. Vorzugsweise ist das NFC-Modul derart ausgeführt, dass es auch bei leerer Batterie 9 energieversorgt über das Kommunikationsfeld ausgelesen werden kann. Hierbei wird das NFC-Modul aus dem RF-Feld der aktiven Komponente, d.h. eines entsprechenden Readers mit Energie versorgt.

Das erfindungsgemäße Kundenmedium kann z.B. als Ticket im Rahmen eines "be-in-be-out"- oder "check-in-check-out" -Ticket-Erfassungssystems verwendet werden. Ferner kann das Kundenmedium als Mittel zur Ermittlung einer gültigen Zugangsberechtigung in Skigebieten, Messen, Sport- oder Kulturveranstaltungen, in Parkhäusern oder im Rahmen von "On street parking" Systemen verwendet werden. Zudem kann das Kundenmedium als Medium zur Ortung einer Person bei Lawinenunfällen verwendet werden.

## Patentansprüche

1. Kundenmedium (1) zur Erfassung der Beanspruchung von Dienstleistungen, **dadurch gekennzeichnet, dass** es eine erste und eine zweite Antenne (2, 3) zur langreichweitigen Daten-Kommunikation, eine dritte Antenne (4), einen integrierten Schaltkreis (6) umfassend zumindest eine crypto-engine, einen mit dem integrierten Schaltkreis (6) verbundenen oder in den integrierten Schaltkreis (6) integrierten Mikroprozessor (5), einen Operationsverstärker (8) und einen mit der zweiten Antenne (3) verbundenen RF- Tranceiver (7) umfasst, wobei die dritte Antenne (4) mit einem NFC-Modul im integrierten Schaltkreis (6) verbunden ist und in einem Aktiv-Modus des Kundenmediums (1) der kurzreichweitigen Daten-Kommunikation dient, wobei die erste Antenne (2) als Wake-up-Antenne zum Empfangen eines amplitudenmodulierten Wake-up-Signals dient, wenn sich das Kundenmedium in einem "Sleep"-Modus befindet, wobei das von der Wake-up-Antenne (2) empfangene Signal von dem als Wake-up-Erfassungsmodul dienenden Operationsverstärker (8) demoduliert und verstärkt wird und von dem im "Sleep-Modus" teilweise aktivierten Mikroprozessor (5) ausgewertet wird und wobei für den Fall eines als gültig erkannten Wake-up-Signals der Mikroprozessor (5) vollständig eingeschaltet wird, wodurch das Kundenmedium (1) in den Aktiv-Modus übergeht und wobei der Operationsverstärker (8) die einzige Komponente des Kundenmediums (1) ist, die im "Sleep"- Modus vollständig aktiv ist.

2. Kundenmedium (1) zur Erfassung der Beanspruchung von Dienstleistungen, nach Anspruch 1, **dadurch gekennzeichnet, dass** es einen Ruhe-Modus aufweist, bei dem nur der Mikroprozessor (5) aktiv ist, um den Übergang in den "Sleep"-Modus oder in den Aktiv-Modus gemäß vorgegebener Routinen zu steuern.

3. Kundenmedium (1) zur Erfassung der Beanspruchung von Dienstleistungen, nach Anspruch 2, **dadurch gekennzeichnet, dass** im "Sleep"-Modus nur der Operationsverstärker (8) und ein Teil des Mikroprozessors aktiviert sind, dass der Mikroprozessor (5) im im Ruhe- und Aktiv-Modus eingeschaltet ist und dass der Tranceiver (7) im "Sleep"- und im Ruhe-Modus ausgeschaltet und lediglich im Aktiv-Modus eingeschaltet ist, wodurch der Energieverbrauch des Kundenmediums (1) minimiert wird.

4. Kundenmedium (1) zur Erfassung der Beanspruchung von Dienstleistungen, nach Anspruch 1, 2 oder 3, **dadurch gekennzeichnet, dass** es als aktives Kundenmedium ausgeführt ist, wobei es zur Stromversorgung der Komponenten eine Batterie (9) umfasst.

5. Kundenmedium (1) zur Erfassung der Beanspruchung von Dienstleistungen, nach Anspruch 4, **dadurch gekennzeichnet, dass** es zur Stromversorgung der Batterie ein entsprechend dimensioniertes Solarmodul aufweist.

6. Kundenmedium (1) nach einem der vorangehenden Ansprüche 1-3, **dadurch gekennzeichnet, dass** das es derart ausgeführt ist, dass es über einen HF-Puls mit Energie geladen wird und anschließend für eine vorgegebene Zeit autark arbeiten kann.

7. Kundenmedium (1) nach Anspruch 6, **dadurch gekennzeichnet, dass** das "Wake-Up Signal" für das Kundenmedium (1) im HF-Puls enthalten ist.

8. Kundenmedium (1) zur Erfassung der Beanspruchung von Dienstleistungen, nach einem der vorangehenden Ansprüche, **dadurch gekennzeichnet, dass** es ein LCD-Display (10) und einen entsprechenden Treiber (11) mit minimalem Stromverbrauch und/oder eine Einrichtung zur optischen und/oder akustischen Anzeige eines niedrigen Batteriestatus aufweist.

9. Kundenmedium (1) zur Erfassung der Beanspruchung von Dienstleistungen, nach einem der vorangehenden Ansprüche, **dadurch gekennzeichnet, dass** es Mittel zur Eingabe einer PIN und/oder einen Biometriesensor aufweist, um die Berechtigung der Benutzung seitens einer Person zu überprüfen.

10. Kundenmedium (1) zur Erfassung der Beanspruchung von Dienstleistungen, nach einem der vorangehenden Ansprüche, **dadurch gekennzeichnet, dass** es ein ISO-Kartenformat aufweist.

11. Kundenmedium (1) zur Erfassung der Beanspruchung von Dienstleistungen, nach einem der vorangehenden Ansprüche, **dadurch gekennzeichnet, dass** die Antennen (2, 3, 4) des Kundenmediums (1) als Dipole, gefaltete Dipole, "inverted F"-Antennen, Quadrupol-Antennen, ähnlich Patch-Antennen oder Antennenschleifen und -spulen auf einem PCB-Substrat ausgeführt sind.

12. Verwendung eines Kundenmediums nach einem der vorstehenden Ansprüche als Ticket im Rahmen eines "be-in-be-out"- oder "check-in-check-out" - Ticket-Erfassungssystems.

## Claims

1. A customer-specific medium (1) for registering the take-up of services, **characterised in that** it comprises a first and a second antenna (2, 3) for long-range data communication, a third antenna (4), an integrated circuit (6) including at least one crypto-engine, a microprocessor (5) connected to the integrated circuit (6) or integrated into the integrated circuit (6), an operational amplifier (8) and an RF transceiver (7) connected to the second antenna (3), wherein the third antenna (4) is connected to an NFC module in the integrated circuit (6) and facilitates short-range data communication when the customer-specific medium (1) is in an active mode, wherein the first antenna (2) serves as a wake-up antenna for receiving an amplitude-modulated wake-up signal when the customer-specific medium (1) is in a 'sleep' mode, wherein the signal received by the wake-up antenna (2) is demodulated and amplified by the operational amplifier (8) acting as a wake-up detecting module and evaluated by the microprocessor (5) which is partially activated in `sleep' mode, and wherein the microprocessor (5) is fully activated in the case of a wake-up signal recognised as valid, whereby the customer-specific medium (1) switches into the active mode and wherein the operational amplifier (8) is the only component of the customer-specific medium (1) which is fully active in 'sleep' mode.

2. The customer-specific medium (1) for registering the take-up of services according to claim 1, **characterised in that** it has an idle mode in which only the microprocessor (5) is active in order to control the transition into 'sleep' mode or active mode according to predefined routines.

3. The customer-specific medium (1) for registering the take-up of services according to claim 2, **characterised in that** in 'leep' mode only the operational amplifier (8) and part of the microprocessor are activated, **in that** the microprocessor (5) is switched on in idle and active mode and the transceiver (7) is switched off in sleep and idle mode and only switched on in active mode, whereby the energy consumption of the customer-specific medium (1) is minimised.

4. The customer-specific medium (1) for registering the take-up of services according to claims 1, 2, or 3, **characterised in that** it is realised as an active customer-specific medium (1), wherein it comprises a battery (9) for supplying the components with power.

5. The customer-specific medium (1) for registering the take-up of services according to claim 4, **characterised in that** it comprises a correspondingly dimensioned solar module for supplying the battery with power.

6. The customer-specific medium (1) for registering the take-up of services according to claims 1 to 3, **characterised in that** it is set up in such a way that it is charged with energy via an HF impulse and can subsequently function self-sufficiently for a given time period.

7. The customer-specific medium (1) for registering the take-up of services according to claim 6, **characterised in that** the 'wake-up' signal for the customer-specific medium (1) is contained in the HF impulse.

8. The customer-specific medium (1) for registering the take-up of services according to any of the preceding claims, **characterised in that** it comprises an LCD display (10) and a corresponding driver (11) with minimal power consumption and/or a device for visual or audio indication of a low battery status.

9. The customer-specific medium (1) for registering the take-up of services according to any of the preceding claims, **characterised in that** it comprises means for entering a PIN and/or a biometric sensor in order to validate a person's permission to use it.

10. The customer-specific medium (1) for registering the take-up of services according to any of the preceding claims, **characterised in that** it has an ISO card format.

11. The customer-specific medium (1) for registering the take-up of services according to any of the preceding claims, **characterised in that** the antennae (2, 3, 4) of the customer-specific medium (1) are set up as dipoles, folded dipoles, "inverted F" antennae, quadrupole antennae, patch-resembling antennae or antenna loops and coils on a PCB substrate.

12. A use of a customer-specific medium according to any of the preceding claims as a ticket in terms of a 'be-in-be-out' or 'check-in-check-out' ticketing system.

## Revendications

1. Support client (1) pour la détection de la sollicitation de prestations de services, **caractérisé en ce qu'**il comprend une première et une deuxième antenne (2, 3) pour la communication de données de longue portée, une troisième antenne (4), un circuit de commutation intégré (6) comprenant au moins un calculateur de cryptographie, un microprocesseur (5) relié au circuit de commutation intégré (6) ou intégré dans le circuit de commutation intégré (6), un amplificateur opérationnel (8) et un émetteur/récepteur RF (7) relié à la deuxième antenne (3), dans lequel la troisième antenne (4) est reliée à un module NFC dans le circuit de commutation intégré (6) et sert à la communication de données de courte portée dans un mode actif du support client (1), dans lequel la première antenne (2) sert d'antenne de wake-up pour réceptionner un signal de wake-up modulé en amplitude lorsque le support client se trouve dans un mode « sleep », dans lequel le signal réceptionné par l' antenne de wake-up (2) est démodulé et amplifié par l'amplificateur opérationnel (8) servant de module de détection de wake-up et est évalué par le microprocesseur (5) partiellement activé en mode « sleep » et dans lequel, dans le cas d'un signal de wake-up reconnu comme étant valide, le microprocesseur (5) est complètement mis en marche, moyennant quoi le support client (1) passe au mode actif, et dans lequel l'amplificateur opérationnel (8) est l'unique composant du support client (1) qui est complètement actif en mode « sleep ».

2. Support client (1) pour la détection de la sollicitation de prestations de services selon la revendication 1, **caractérisé en ce qu'**il présente un mode de veille où seul le microprocesseur (5) est actif afin de commander la transition au mode « sleep » ou au mode actif conformément à des routines prescrites.

3. Support client (1) pour la détection de la sollicitation de prestations de services selon la revendication 2, **caractérisé en ce que** dans le mode « sleep », seuls l'amplificateur opérationnel (8) et une partie du microprocesseur sont activés, **en ce que** le microprocesseur (5) est allumé dans les modes de veille et actif, et **en ce que** l'émetteur/récepteur (7) est éteint dans les modes « sleep » et de veille et est seulement allumé dans le mode actif, moyennant quoi la consommation d'énergie du support client (1) est minimisée.

4. Support client (1) pour la détection de la sollicitation de prestations de services selon les revendications 1, 2 ou 3, **caractérisé en ce qu'**il est réalisé en tant que support client actif, moyennant quoi il comprend une pile (9) pour l'alimentation en courant des composants.

5. Support client (1) pour la détection de la sollicitation de prestations de services selon la revendication 4, **caractérisé en ce qu'**il présente un module solaire dimensionné de manière correspondante pour l'alimentation en courant de la pile.

6. Support client selon l'une des revendications 1-3 précédentes, **caractérisé en ce qu'**il est réalisé de manière à être chargé en énergie via une impulsion HF et qu'il peut ensuite travailler de manière autonome pendant un temps prescrit.

7. Support client (1) selon la revendication 6, **caractérisé en ce que** le « signal de wake-up » pour le support client (1) est contenu dans l'impulsion HF.

8. Support client (1) pour la détection de la sollicitation de prestations de services selon l'une des revendications précédentes, **caractérisé en ce qu'**il présente un afficheur à cristaux liquides (10) et un pilote (11) correspondant à consommation électrique minimale et/ou un dispositif pour l'affichage optique et/ou acoustique d'un état de pile faible.

9. Support client (1) pour la détection de la sollicitation de prestations de services selon l'une des revendications précédentes, **caractérisé en ce qu'**il présente des moyens pour la saisie d'un PIN et/ou un capteur biométrique afin de contrôler le droit d'utilisation du côté d'une personne.

10. Support client (1) pour la détection de la sollicitation de prestations de services selon l'une des revendications précédentes, **caractérisé en ce qu'**il présente un format de carte ISO.

11. Support client (1) pour la détection de la sollicitation de prestations de services selon l'une des revendications précédentes, **caractérisé en ce que** les antennes (2, 3, 4) du support client (1) sont réalisées en tant que dipôles, dipôles pliés, antennes « inverted F », antennes quadripolaires, à la manière d'antennes patch ou de lobes et bobines d'antennes sur un substrat en PCB.

12. Utilisation d'un support client selon l'une des revendications précédentes en tant que ticket dans le cadre d'un système de détection de ticket « be-in-be-out » ou « check-in-check-out ».
